# EUROPEAN PATENT SPECIFICATION

(11) **EP 1 620 238 B1**
(45) Date of publication and mention of the grant of the patent: **14.03.2012**
(21) Application number: 04725218.4
(22) Date of filing: 01.04.2004
(51) Int. Cl.: B07B 9/02, B28D 5/00, B24B 55/12, B24B 57/02

(54) **METHOD FOR CLEANING SIC PARTICLES**
VERFAHREN ZUR REINIGUNG VON SIC-PARTIKELN
PROCEDE DE PURIFICATION DE PARTICULES DE CARBURE DE SILICIUM

(30) Priority: 23.04.2003 NO 20031821
(43) Date of publication of application: 01.02.2006
(73) Proprietor: Metallkraft AS, 4677 Kristiansand (NO)
(72) Inventor: RAANESS, Ola, Schiefloe, N-7052 Trondheim (NO); CHMELAR, Juraj, N-7020 Trondheim (NO)
(74) Representative: Jennings, Michael John
(86) International application number: PCT/NO2004/000094
(87) International publication number: WO 2004/098848

(56) References cited:
- EP-A1- 0 968 801
- WO-A1-96/31294
- WO-A1-02/096611
- DE-A1- 19 526 040
- JP-A- 57 144 665
- US-B1- 6 231 628
- NISHIJIMA S., ET AL.: 'Recycling of Abrasives From Wasted Slurry by Superconducting Magnetic Separation' IEEE TRANSACTIONS ON APPLIED SUPERCONDUCTIVITY vol. 13, no. 2, June 2003, pages 1596 - 1599, XP002979257

## Description

The present invention relates to a method for cleaning SiC particles that have been used in suspension in a cutting medium for the cutting or sawing of silicon wafers for solar cells and electronic objects often called spent sawing sludge.

### Background

When sawing thin silicon discs, commonly referred to as "wafers", particles of silicon carbide belonging to FEPA classes F 400, F 500, and F 600 are dispersed in an organic liquid, thus forming a suspension, which is used as a cutting medium. The most common dispersing agents are organic glycolic liquids such as polyethylene glycol or di-propylene glycol with the addition of surfactants that reduce the surface tensions.

The sawing is usually conducted by a wire saw to which a thin, hardened steel wire with brass on the surface, cuts the silicon block into a series of thin wafers while the particles from the sawing are suspended in said carbide containing suspension. During the sawing process the suspension becomes contaminated with silicon from the silicon block, and by iron and brass from the cutting wire.

Typically, the silicon wafers are used for the manufacture of electronic objects (microelectronics), or for the manufacture of solar cell panels for the production of electric power. The requirement of purity these silicon wafers demand is typically so high that, in practice, only silicon free and iron free suspensions have been used for the cutting. Furthermore, the requirement for particle size distribution is precisely specified in order to obtain smooth surfaces on the silicon wafers. Silicon carbide particles for sawing lies within a narrow grain size range, i.e. that there is little difference between the size of the largest and the smallest grains. Many users employ only silicon carbide particles of FEPA F500 quality. The requirement of this product is discussed later.

After having been used for some time, the cutting suspension becomes so contaminated with iron and silicon that it has to be replaced by a new suspension. When disposed of in special land fills there is a risk that glycol leak out into the environment. Another alternative is burning by which the liquid phase (component) is burned along with the solid particles. The glycol is burned, reducing it to CO2 and water, while the solid particles form a heavy metal containing ash that represents an environmental problem. Both from a resource, cost and environmental point of view is it desirable to develop processes by which iron and silicon from the block may be removed from the suspension. Recycling of the silicon carbide also means reduced total energy consumption in e.g. manufacturing solar cells. Recycling also means less environmental strain with respect to both the production of the silicon carbide and with respect to the burning or deposition of the carbide containing suspension in special land fills due to a lack of cleaning processes.

An ecological and sustainable development of the silicon carbide implies that it should be processed to give high yields for recycling, and that waste contaminated with iron and silicon should be recycled into valuable resources e.g. for use in the production of iron and steel, ferro-alloys or refractory materials. Such a development implies that the recycling process is designed in a manner such that organic dispersing agents may be recovered in high yields and reused for sawing of silicon wafers.

Most commonly FEPA F500 and F600 microgrits are used in the sawing of silicon wafers, and it is important that the grains of silicon carbide conform to the standard to obtain a good result. With the present cleaning technology, the normal practice is that the suspension of particles and polyethylene glycol or di-propylene glycol is diluted with large quantities of water, and treated in settling vessels. In these processes, it is desirable to make use of the fact that the silicon carbide particles have larger diameters than do the contaminants of iron and silicon.

The rigid requirement that the grain diameter be within narrow limits leads to low yields. The settling process therefore has to be interrupted before finer particles of silicon, iron or possibly crushed grains of silicon carbide, reach the settled phase of silicon carbide with desired grain size. The settled particles of silicon carbide obtained in the settlement vessel are dried and screened according to known methods. Glycol based dispersing agents, highly diluted with water, are required to increase the settling velocity, which makes an economical and ecological recovery process for the dispersing agent difficult.

A client has informed the inventors that in attempting a method of direct settlement of particles from a standard silicon carbide suspension, it took one year to settle 99% of the finest particles. Separation according to this principle is not economically feasible in the industrial production of silicon wafers.

WO96/31294 relates to an air classifier for silicon carbide particles. DE19526040 discloses a mill for extracting desired particle sizes. A further publication, JP57144665 relates to separating components of a sludge formed by a grinding process. US6231628 relates to separating, recovering and reusing components of an exhausted glycol-based slurry used in slicing silicon wafers from a silicon ingot and discloses a method in accordance with the preamble of claim 1.

### Objectives

It is thus an object of the present invention to provide a method for cleaning silicon carbide particles of a narrow grain size for particularly smaller particles, typically of iron, brass and silicon.

It is a further object of the invention to provide such a method that does not have a negative impact on the environment.

Yet a further object of the invention is to provide such a method that may be applied cost-effectively on an industrial scale, in a manufacturing process as described above.

Said objectives are fulfilled by the method according to the present invention.

### The Invention

The invention consists of a method that is characterized by the features defined by claim 1. Preferred embodiments of the invention are disclosed by the dependent claims. It is a vital aspect that, by the method according to the invention, recycled particles of silicon carbide within the FEPA (Federation of European Producers of Abrasives) standards of microgrits are obtainable. FEPA is the international standard to which these kinds of materials have to comply. The relevant standard is FEPA standard 42-6B 1984, R 1993. (The same definition is incidentally defined by ISO 6344-3 1968, part 3: "Determination of grain size distribution of microgrits F230 to F1200").

During the conception of the present invention, tests were conducted in which both polyethylene glycol and polypropylene glycol were used as dispersing agents. In practice, the choice between these two dispersing agents did not make any difference to the cleaning process.

By ordinary classification, the smallest particles will be present as individual grains that may be separated from the larger particles by a convenient choice of process parameters.

With respect to these silicon carbide particles, however, subsequent to the removal and recovery of the dispersing agent from the used suspension, the small particles will adhere to the larger F500 SiC grains that are typically applied for sawing silicon wafers.

Below, the method according to the invention is described in more detail with reference to the attached drawings, where:
Figure 1 is a picture of unused particles of silicon carbide.
Figure 2 is a picture of particles of silicon carbide with contaminations after use.
Figure 3 is a picture of used particles subsequent to having been cleaned with the method according to the invention.
Figure 4 is a block diagram of the individual steps of the cleaning process according to the invention.
Figure 5 shows an example (Example 1) of particle size distribution in feed flow 1 of Figure 4.
Figure 6 shows an example (Example 1) of particle size distribution in feed flow 6 of Figure 4.
Figure 7 shows an example (Example 1) of particle size distribution in feed flow 9 of Figure 4
Figure 8 shows particle size distribution (Example 1) compared to F500 standard FEPA material.
Figure 9 is a graph (plot) showing a measured example of particle size distribution of a SiC material cleaned by the method according to the invention (feed flow 8 of Figure 4).
Figure 10 is a graph showing a measured example of particle size distribution of the second fine fraction (feed flow 9 of Figure 4).

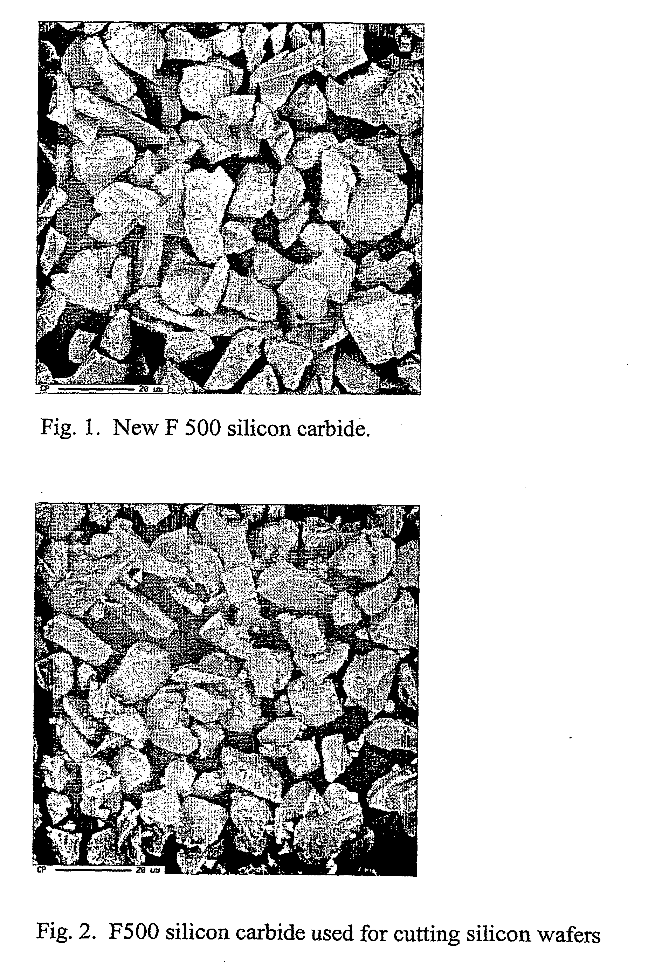

Figure 1 shows unused silicon carbide particles with grain size F500 in accordance with FEPA standard 42-6B 1984, R 1993. The particles are free from contaminants.
Figure 2 shows the same particles after some time of use. The picture shows how small particles adhere to the surface of the larger SiC grains, subsequent to the removal of the dispersing agent.

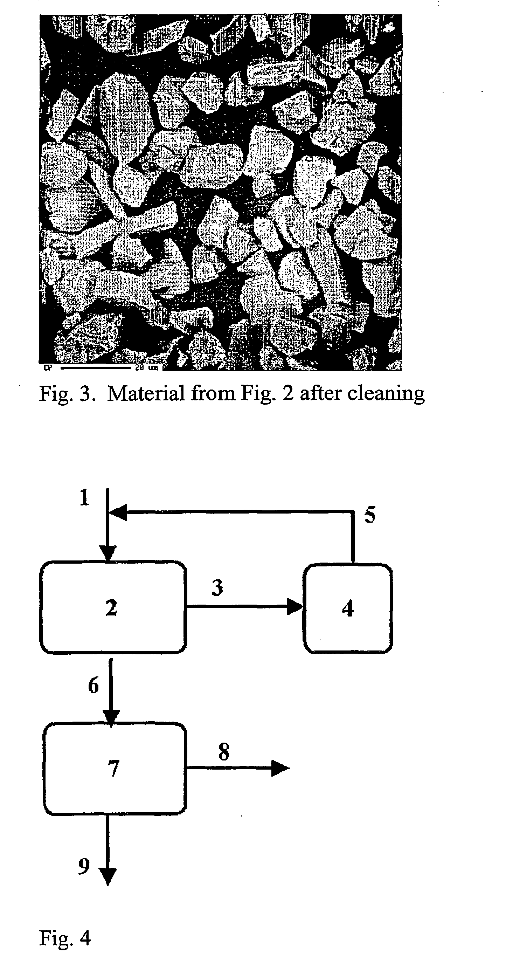

Figure 3 shows the particles of Figure 2 after having been cleaned by the method according to the present invention. As disclosed by the picture, most of the small contaminating particles shown in Figure 2 have been removed, and the silicon carbide particles may again be dispersed in a convenient dispersing agent, in order to be used as a sawing or cutting medium.
Figure 3 indicates what has also been experienced in practical tests, that the recovered silicon carbide has utility properties corresponding to unused F500 silicon carbide.
Figure 4 is a block diagram of the individual steps of the process. The entire process is described below with reference to Figure 4.

Used silicon carbide containing suspensions from the sawing of silicon wafers are filtered according to prior art technology, as long as the solids are not compacted too much. The solids are heated under agitation so that the dispersing agent is evaporated and thereafter condensed and recovered according to known technology so that the solids assume the form of a dry powder.

The dry powder 1 of silicon carbide particles, silicon particles and iron particles are being fed into an air classifier 2. When cleaning e.g. microgrits F500 (such as) silicon carbide, the operational conditions are adjusted based on experimental data to ensure that grains larger than 27µm are separated out as a coarse fraction 3. Grains larger than 27µm are agglomerates being formed during the removal of the dispersing agent.

The agglomerates are fed to a jet mill 4 that will break them down without crushing the silicon carbide grains. This material 5 is returned to fraction 3 for further classification.

The fine fraction 6 from classifier 2 consists of material finer than 27µm. This first fine fraction 6 is transferred to a second classifier 7 or returned for further treatment in the classifier of step 3 (under different operational conditions). The operational conditions of classifier 7 are such that e.g. grains finer than 5µm are discharged as a second fine fraction 9, while grains between, about 5µm and 27µm are discharged as a second coarse fraction 8 from the second classifier 7, or the second step 7 of classification.

This second coarse fraction 8 is made up of the cleaned silicon carbide as shown in Figure 3. The separation limit may be varied as desired.

It is assumed that the small particles of fine fraction 9 are knocked off the larger grains of coarse fraction 8 to which they adhere, due to collisions between particles, and/or between individual particles and the surface of the classifier.

As an alternative to the process flow as shown in Figure 4, the dry powder 1 at the start may, for pre-treatment, be fed to a jet-mill 4 before entering the first classifier 2. This requires more energy, but may be convenient if the dry powder at the start contains a lot of agglomerates.

As indicated above, instead of using two different classifiers, it is possible to use one and the same classifier for both the first and second step of separation. This requires a batch operation instead of a continuous operation with readjustment of the rotational speed of the classifier between the two separation steps.

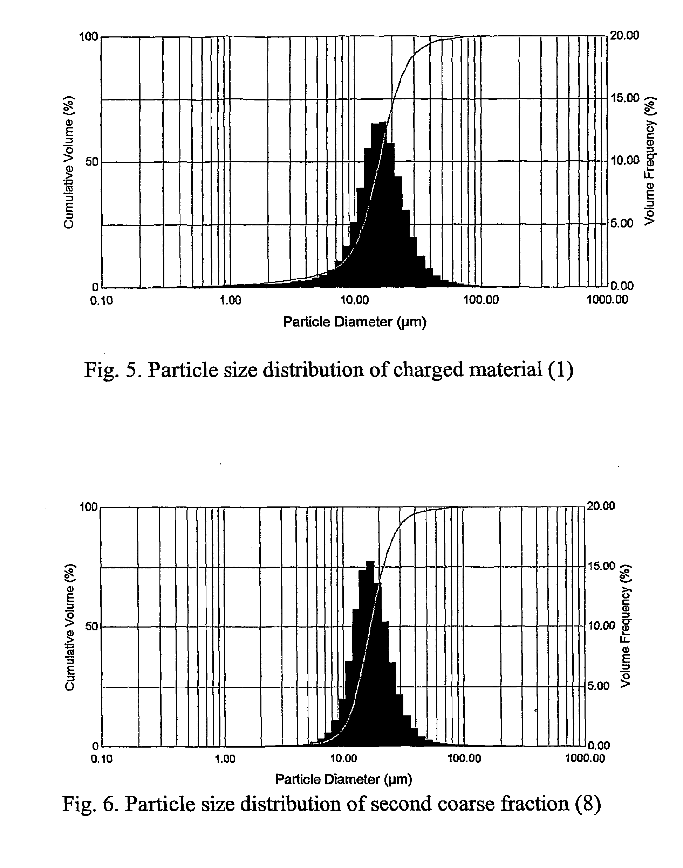

Figures 5-8 show actual examples of particle size distribution in the material flows that are included in the process shown in Figure 4.

Figure 5 shows plots of the particle size distribution of material from the feeder prior to classification. Compared to the international FEPA standard for microgrits F500, the material feed contains too much coarse and fine material in coarse and fine fraction. The analysis is conducted in apparatus known as a Matvern/Insitec particle size analyser.

Figure 6 shows the particle size distribution of the coarse fraction (cleaned product) containing about 0.3% particles less than 3 µm.

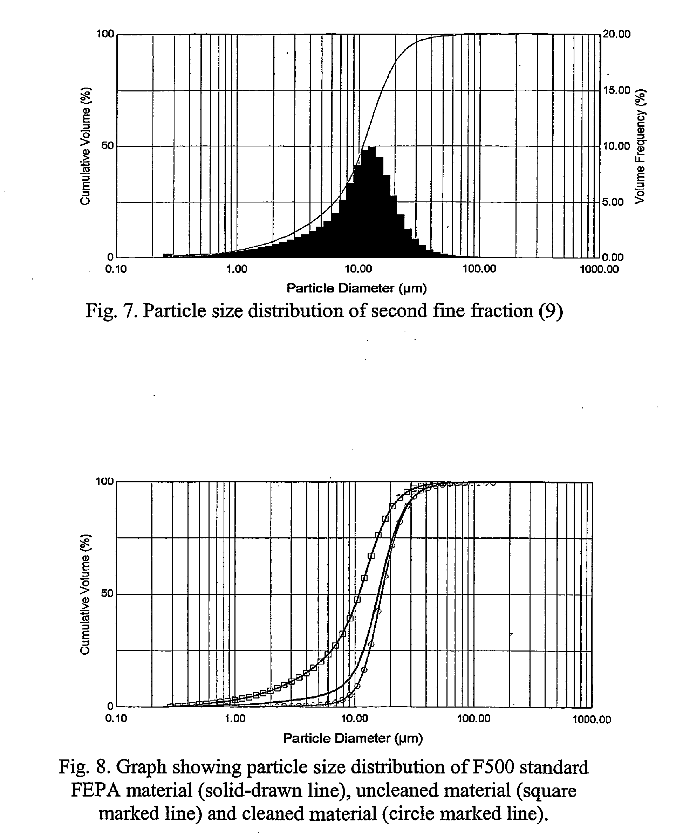

Figure 7 shows the particle size of the fine fraction of Figure 4, which contains the fine fraction that has smaller particles than allowed according to FEPA F500.

Figure 8 is a graph showing particle size distribution of FEPA F500 with solid-drawn line. The line for uncleaned material, marked with squares, shows inclusions of too fine material, while cleaned material is represented by the line marked by circles. Figure 8 shows that the cleaned material (line marked with circles) has what a skilled operator will call a steeper curve, and thus a more narrow grain fraction than what is required by FEPA F500.

The drawings 9 and 10 are commented under example 2 below.

The graphs confirm that fine material in the form of iron, silicon, brass etc. adhered to the larger grains of silicon carbide, are separable from the latter ones.

### Examples

Some users employ silicon carbide manufactured in accordance with FEPA F500 and by the process of the present invention; it is an intention to re-manufacture a product that complies with the FEPA standard. This standard has the following requirements:

| | |
|---|---|
| Maximum : | 3% of grains > 25µm |
| Median D50% within range: | 13.8µm - 11.8µm |
| Minimum size: | 94% > 5µm |

When classifying in accordance with the present invention as discussed with reference to Figure 4 the following results were obtained:

| | |
|---|---|
| Maximum | 3% of grains > 17.5µm |
| Median D50 | D50 = 11.9µm |
| Minimum size | 94% > 5.4µm |

### Example 1

Particles of silicon carbide were treated as described above and are shown in Figure 4.

Firstly, the material was classified in an Alpine air classifier type 50 ATP at 4500 rpm or 235 radians/ sec. rotor speed. This is required to remove coarse particles. Particles larger than 27 µm (agglomerates) were treated in a jet mill of type AFG 100 in which the agglomerates were broken down. A yield of 98% was obtained in the fraction less than 27 µm.

To remove grains smaller than about 3 µm, which is smaller than desirable in the product, the fine fraction from step (a) was thereafter classified at 10 000 rpm or 520 radians/ sec in the aforementioned Alpine apparatus. In this step a yield of 96.5 % by weight was obtained in the form of ready, classified product, as calculated from the weight of the fine fraction leaving step (a).

Thus, the overall yield was 94.5%. The Figures 5-8 present the results of example 1.

### Example 2

Example 2 was conducted to show that it is possible to scale up the process of the invention to an industrial scale. Tests at an industrial scale, to verify that the silicon carbide material (priory) used for cutting silicon wafers, attained FEPA F500 standard, were conducted with an air classifier of type SAC 200 (Sintef Air Classifier 200). The air classifier SAC 200 has a production capacity of up to 800 kg/hour. The test procedure was equivalent to example 1, except that the jet-mill was omitted.

In the first step of classification a rotational speed of 850 rpm corresponding to 45 radians/ sec was used. The classifier was supplied with 350 kg of contaminated material per hour, in both the first and the second step.

At this speed, the coarse particles/ agglomerates are separated from the fine material. The angular speed and the local gas velocity provide a top particle size corresponding to FEPA standard F500.

In step two, the rotational speed is increased to 5500 rpm corresponding to 290 radians/sec, to remove the fine particles with a size less than 5 µm.

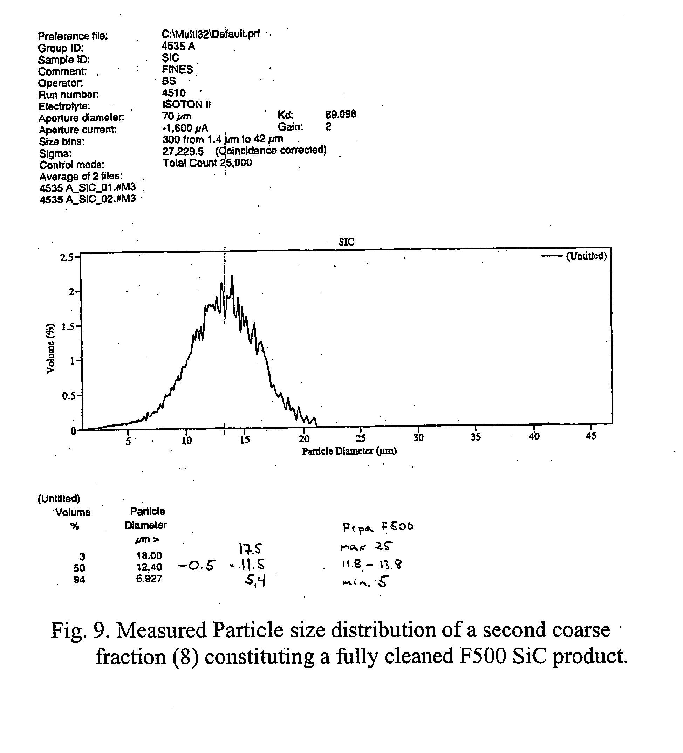

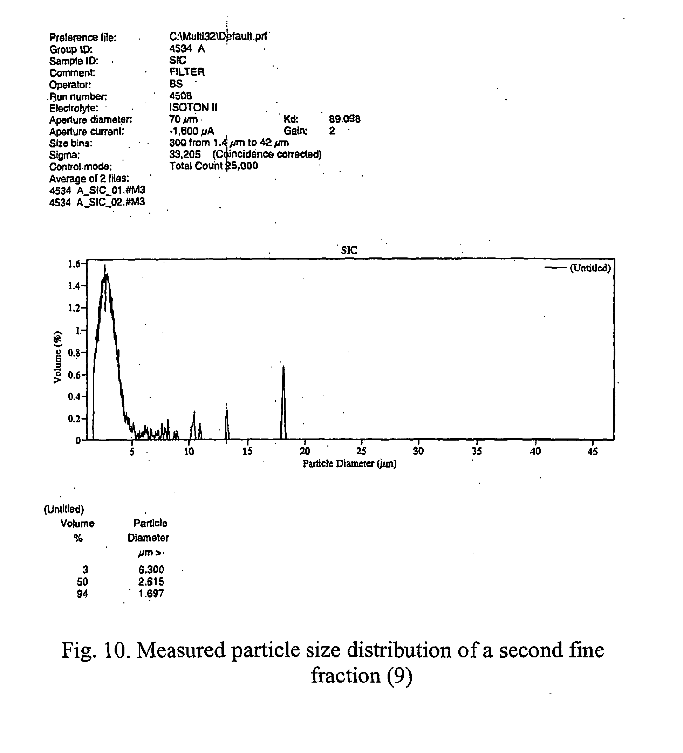

Representative samples were taken from the fine and the coarse fractions and analyzed on a Coulter Counter Multisizer 3. Analyses of the results are presented in Figures 9 and 10.

The graph in Figure 9 shows a particle size distribution of a second coarse fraction, i.e. a completely cleaned F500 SiC product. As shown, the plot is well within the limits of the FEPA F500 standard. Figure 10 substantiates how the fine material has been separated out in a separate flow (second fine fraction 9 of figure 4) of material. The chemical composition of this second fine fraction 9 may typically be:
66% in the form of silicon particles
28% in the form of silicon carbide particles
6% in the form of iron produced in the cutting process

As disclosed by the chemical analysis and by Figure 8, a portion of the silicon carbide that has been demolished in the cutting process has been transferred to the fine fraction in the cleaning process. Furthermore the fine fraction contains iron from the steel wire used for the cutting.

When determining operational parameters for dry classification of fine grain materials, there are a number of parameters that have influence on the separation border between the coarse fraction and the fine fraction of particles.

The air classifier as used in example 1, an Alpine ATP 50, has been investigated in general with respect to functionality and separation borders at different operational conditions.

Corresponding investigations have been performed on the SAC 200 classifier as used for example 2. These results are published in a publication from Jacek Kolacz: "improving the Fine Grinding Process in Air Swept Ball Mill Circuits, PhD thesis 1995, NTNU Trondheim ISBN 82-7119-857-2 chapter 7. As seen by the measurements, a skilled operator can find the desired separation conditions to provide the desired product by changing rotational speed, feed rate, gas (preferably air) flow rate, and the relation between these parameters. This is relevant in relation to individual particles. In the case of agglomerates, these will behave like individual particles with the exception that mechanical strain may cause agglomerates to collapse at high rotational velocities.

Dependent upon the strength of the agglomerates, an experienced operator may increase the rotational speed beyond the normal range in order to obtain agglomerate breakdown. How much of an increase will depend on the particular type of equipment used.

When using a jet-mill and air classifiers, the operational conditions are adapted so as to avoid crushing of the silicon carbide in the product, i.e. only the agglomerates are broken down.

## Claims

1. Method for cleaning of silicon carbide particles from fine grain particles adhering to said silicon carbide particles, typically in the form of agglomerates of metal particles, subsequent to production cutting of silicon wafers and after removal of any present solute or dispersing agent from the particles, wherein the particles of (1) of contaminated silicon carbide are firstly exposed to a mechanical treatment in a first step (2) of cleaning in a classifying apparatus
- where a first coarse fraction (3) of particles, agglomerates larger than the original silicon carbide particles are separated
- while a first fine fraction (6) is discharged from said first step (2), **characterized in that**
said separated first coarse fraction (3) of particles, agglomerates larger than the original silicon carbide particles are treated in a jet-mill (4) where the agglomerates are broken down to individual grains, without crushing said individual grains and thereafter recycled (5) to said first step (2) of cleaning,
and **in that**
said first fine fraction (6) is transferred to a second step (7) of cleaning conducted in a classifying apparatus from which the particles of silicon carbide are discharged in the form of a second coarse fraction (8),
while the contaminants separated out In said second step of cleaning are discharged in the form of a second fine fraction (9).

2. Method as claimed in claim 1, wherein the particles (1) are pre-treated in a jet-mill to break down agglomerates larger than the silicon carbide particles without crushing the individual grains constituting the agglomerates.

3. Method as claimed in claim 1, wherein air classifiers with an air consumption of 1 m³ per 0.3-1. 5 kg particles are used for the first (2) and second (7) steps of cleaning.

4. Method as claimed in claim 1 or claim 3, wherein the cleaning in the first step (2) is conducted by exposing the particles to a centripetal acceleration induced by an angular velocity of at least 30 radians/sec.

5. Method as claimed in claim 1, wherein the cleaning in the second step (7) is conducted by exposing the particles to a centripetal acceleration induced by an angular velocity in the range from 60 to 600 radians/sec.

6. Method as claimed In claim 1, wherein the particles of the second fine fraction (9) are separated from discharge air by means of a filter.

7. Method as claimed in claim 6 wherein said filter comprises woven filter materials.

8. Method as claimed in claim 1, wherein silicon grains that are crushed to a smaller particle size than the lower limit of the FEPA standard 42-6B 1984, R 1993 are removed in second fine fraction (9).

## Patentansprüche

1. Verfahren zur Reinigung von Siliciumcarbidpartikeln von feinkörnigen Partikeln, die an den Siliciumcarbidpartikeln anhaften, typischerweise in Form von Agglomeraten aus Metallpartikeln, im Anschluss an das Produktionsschneiden von Silicium-Wafern und nach der Entfernung etwaig vorhandener gelöster Stoffe oder Dispergiermittel von den Partikeln, wobei die Partikel (1) aus verunreinigtem Siliciumcarbid zuerst einer mechanischen Behandlung in einem ersten Reinigungsschritt (2) in einer Klassiervorrichtung unterworfen werden,
- worin eine erste grobe Fraktion (3) von Partikeln, Agglomerate, die grösser als die ursprünglichen Siliciumcarbidpartikel sind, abgetrennt wird,
- während eine erste feine Fraktion (6) aus dem ersten Schritt (2) abgeführt wird,
**dadurch gekennzeichnet, dass**
die abgetrennte erste grobe Fraktion (3) von Partikeln, Agglomerate, die grösser als die ursprünglichen Siliciumcarbidpartikel sind, in einer Strahlmühle (4) behandelt wird, worin die Agglomerate zu individuellen Körnern zerkleinert werden, ohne die individuellen Körner zu zermahlen, und anschliessend zum ersten Reinigungsschritt (2) zurückgeführt werden (5),
und dadurch, dass
die erste feine Fraktion (6) in einen zweiten Reinigungsschritt (7) überführt wird, der in einer Klassiervorrichtung durchgeführt wird, aus der die Siliciumcarbidpartikel in Form einer zweiten groben Fraktion (8) abgeführt werden,
während die Verunreinigungen, die im zweiten Reinigungsschritt abgetrennt werden, in Form der zweiten feinen Fraktion (9) abgeführt werden.

2. Verfahren gemäss Anspruch 1, wobei die Partikel (1) in einer Strahlmühle vorbehandelt werden, um die Agglomerate, die grösser als die Siliciumcarbidpartikel sind, zu zerkleinern, ohne die individuellen Körner, die die Agglomerate bilden, zu zermahlen.

3. Verfahren gemäss Anspruch 1, wobei Windsichter mit einem Luftverbrauch von 1 m³ pro 0,3 bis 1,5 kg Partikel für die ersten (2) und zweiten (7) Reinigungsschritte verwendet werden.

4. Verfahren gemäss Anspruch 1 oder Anspruch 3, wobei die Reinigung im ersten Schritt (2) ausgeführt wird, indem die Partikel einer zentripetalen Beschleunigung ausgesetzt werden, die durch eine Winkelgeschwindigkeit von mindestens 30 rad/s induziert wird.

5. Verfahren gemäss Anspruch 1, wobei die Reinigung im zweiten Schritt (7) durchgeführt wird, indem die Partikel einer zentripetalen Beschleunigung ausgesetzt werden, die durch eine
Winkelgeschwindigkeit im Bereich von 60 bis 6.000 rad/s induziert wird.

6. Verfahren gemäss Anspruch 1, wobei die Partikel der zweiten feinen Fraktion (9) von der Abluft mittels eines Filters abgetrennt werden.

7. Verfahren gemäss Anspruch 6, wobei der Filter ein gewebtes Filtermaterial umfasst.

8. Verfahren gemäss Anspruch 1, wobei Siliciumkörner, die zu einer kleineren Partikelgrösse als die untere Grenze des FEPA-Standards 42-6B 1984, R 1993, zermahlen werden, in der zweiten feinen Fraktion (9) entfernt werden.

## Revendications

1. Méthode de nettoyage de particules de carbure de silicium à partir de particules à grains fins adhérant auxdites particules de carbure de silicium (2), typiquement sous la forme d'agglomérats de particules métalliques, ultérieurement à la découpe de production de tranches de silicium et après élimination de tout soluté ou agent dispersant présent dans les particules, dans laquelle les particules (1) de carbure de silicium contaminé sont tout d'abord exposées à un traitement mécanique dans une première étape (2) de nettoyage dans un appareil de classification
- où une première fraction grossière (3) de particules, des agglomérats plus grands que les particules de carbure de silicium d'origine est séparée
- pendant qu'une première fraction fine (6) est évacuée de ladite première étape (2), **caractérisée en ce que**
ladite première fraction grossière (3) séparée de particules, des agglomérats plus grands que les particules de carbure de silicium d'origine est traitée dans un broyeur à jet (4) où les agglomérats sont réduits en grains individuels, sans broyer lesdits grains individuels et ensuite recyclés (5) dans ladite première étape (2) de nettoyage,
et **en ce que**
ladite première fraction fine (6) est transférée dans une seconde étape (7) de nettoyage conduite dans un appareil de classification duquel les particules de carbure de silicium sont déchargées sous la forme d'une seconde fraction grossière (8),
tandis que les contaminants séparés dans ladite seconde étape de nettoyage sont évacués sous la forme d'une seconde fraction fine (9).

2. Méthode selon la revendication 1, dans laquelle les particules (1) sont prétraitées dans un broyeur à jet pour réduire des agglomérats plus grands que les particules de carbure de silicium sans broyer les grains individuels constituant les agglomérats.

3. Méthode selon la revendication 1, dans laquelle des séparateurs à air ayant une consommation d'air de 1 m³ pour 0,3 à 1,5 kg de particules sont utilisés pour les première (2) et seconde (7) étapes de nettoyage.

4. Méthode selon la revendication 1 ou la revendication 3, dans laquelle le nettoyage dans la première étape (2) est conduit par exposition des particules à une accélération centripète induite par une vitesse angulaire d'au moins 30 radians/s.

5. Méthode selon la revendication 1, dans laquelle le nettoyage dans la seconde étape (7) est conduit par exposition des particules à une accélération centripète induite par une vitesse angulaire dans la plage de 60 à 600 radians/s.

6. Méthode selon la revendication 1, dans laquelle les particules de la seconde fraction fine (9) sont séparées de l'air d'évacuation au moyen d'un filtre.

7. Méthode selon la revendication 6, dans laquelle ledit filtre comprend des matériaux de filtre tissés.

8. Méthode selon la revendication 1, dans laquelle des grains de silicium qui sont broyés à une plus petite taille de particule que la limite inférieure de la norme FEPA 42-6B 1984, R 1993 sont éliminés dans la seconde fraction fine (9).
